# EUROPEAN PATENT SPECIFICATION

(11) **EP 2 826 997 B1**
(45) Date of publication and mention of the grant of the patent: **12.09.2018**
(21) Application number: 13761549.8
(22) Date of filing: 15.03.2013
(51) Int. Cl.: F04B 39/00, F16C 19/10, F16C 33/32, F16C 33/38, F16C 33/58, F25B 1/02

(54) **HERMETICALLY SEALED COMPRESSOR, AND FREEZING DEVICE PROVIDED THEREWITH**
HERMETISCHER VERDICHTER UND GEFRIERVORRICHTUNG DAMIT
COMPRESSEUR HERMÉTIQUE, ET DISPOSITIF DE CONGÉLATION DOTÉ DE CELUI-CI

(30) Priority: 16.03.2012 JP 2012059764; 27.04.2012 JP 2012102217; 29.11.2012 JP 2012260664
(43) Date of publication of application: 21.01.2015
(73) Proprietor: Panasonic Appliances Refrigeration Devices Singapore, Singapore 469267 (SG)
(72) Inventor: AKASHI, Hironari, Chuo-ku, OSAKA 540-6207 (JP); IDE, Terumasa, Chuo-ku, Osaka 540-6207 (JP); TSUBOI, Kousuke, Chuo-ku, Osaka 540-6207 (JP); WATANABE, Kiwamu, Chuo-ku, Osaka 540-6207 (JP); KOBAYASHI, Hidenori, Chuo-ku, Osaka 540-6207 (JP); KATAYAMA, Makoto, Chuo-ku, Osaka 540-6207 (JP); HAYASHI, Yasushi, Chuo-ku, Osaka 540-6207 (JP)
(74) Representative: Eisenführ Speiser
(86) International application number: PCT/JP2013/001783
(87) International publication number: WO 2013/136814

(56) References cited:
- JP-A- H0 681 766
- JP-A- H03 107 582
- JP-A- 2006 316 795
- JP-A- 2006 316 795
- JP-A- 2006 329 061
- JP-A- 2006 329 061
- JP-A- 2007 032 562
- JP-A- 2010 255 556
- JP-A- 2010 255 556
- US-A1- 2007 025 864

## Description

### Technical Field

The present invention relates to a sealed compressor and a refrigeration unit including the sealed compressor.

### Background Art

In recent years, a sealed compressor used in a refrigeration unit such as a refrigerator-freezer, has been required to achieve a higher efficiency for reducing electric power consumption, a lower noise, and a higher reliability. There is known a sealed compressor intended to improve a lubricating structure of a thrust bearing for supporting an axial load of a rotary shaft (e.g., see Patent Literature 1).

In the sealed compressor disclosed in Patent Literature 1 forming the closest prior art from which the present invention starts, the rotary shaft is provided with an oil passage array to guide oil to an upper portion, and the oil passage array includes a branch passage to feed a portion of the oil to a thrust bearing. More specifically, the rotary shaft includes a main shaft section, an eccentric shaft section which is eccentric with respect to the main shaft section, and an eccentric section provided between the main shaft section and the eccentric shaft section.

The oil passage array includes a first oil passage formed inside of the main shaft section, a second oil passage formed in an outer surface of the main shaft section such that the second oil passage is communicated with the first oil passage, a third oil passage formed inside of the main shaft section and the eccentric section, and a branch passage which branches from the third oil passage. In this structure, in the sealed compressor disclosed in Patent Literature 1, the oil can be fed to the thrust bearing.

Patent literature 2 discloses a hermetic compressor which includes a thrust ball bearing on a thrust face of a main bearing. A bearing extension part is disposed in which the main bearing is extended to an inner peripheral part of a holder wherein a prescribed axial clearance is formed between an upper end of the bearing extension part and an upper race, and which is formed as a flow passage for lubricating oil.

### Citation List

### Patent Literature

Patent Literature 1: Japanese-Laid Open Patent Application Publication No. 2007-32562.
Patent Literature 2: Japanese-Laid Open Patent Application Publication No. 2010-255556.

### Summary of Invention

### Technical Problem

However, in the sealed compressor disclosed in Patent Literature 1, the oil flowing out of the branch passage or an upper end (downstream end) of the third oil passage flows downward by its own weight and is collected into an oil reservoir formed at a bottom surface of the sealed container. Because of this, for example, if the oil is fed to the thrust bearing with an excessive amount, there is a possibility that the oil fed to the thrust bearing is not sufficiently collected into the oil reservoir, but stays and is stagnant in the thrust bearing.

If the oil stays and is stagnant in the thrust bearing, balls of the thrust bearing are immersed in the oil, which might impede smooth rolling of the balls, due to a viscosity resistance of the oil.

The present invention is directed to solving the above mentioned problem associated with the prior art, and an object of the present invention is to provide a low-noise and high-efficient sealed compressor, which is capable of stably feeding lubricating oil to a thrust ball bearing and stably discharging the lubricating oil from the thrust ball bearing, to thereby enable balls to smoothly roll, and a refrigeration unit including the sealed compressor.

To solve the above mentioned problem associated with the prior art, a sealed compressor of the present invention as defined in claim 1, comprises, among others, an electric component including a stator and a rotor; a compression component actuated by the electric component; and a sealed container accommodating the electric component and the compression component and storing lubricating oil for lubricating the compression component; wherein the compression component includes a shaft including a main shaft section to which the rotor is fastened and an eccentric shaft section, a cylinder block accommodating a piston reciprocatable according to rotation of the shaft, a main bearing unit mounted on the cylinder block to support the main shaft section, and a thrust ball bearing disposed between a flange surface formed in the shaft and a thrust surface formed in the main bearing unit; the main shaft section is provided with a first oil feeding passage to transport the lubricating oil from a lower portion of the main shaft section to an upper portion of the main shaft section; the thrust ball bearing includes a plurality of balls held in a cage, an upper race disposed such that one of its main surfaces is in contact with upper portions of the balls; and a lower race disposed such that one of its main surfaces is in contact with lower portions of the balls; the main surface of the upper race and the main surface of the lower race face each other; at least one of the main surface of the upper race and the main surface of the lower race, the main surfaces facing each other, is provided with a raceway groove which is formed by an annular groove, and in which the balls are placed; and the thrust ball bearing is provided with a second oil feeding passage communicated with the first oil feeding passage and configured to feed the lubricating oil to the raceway groove and a discharge passage through which the lubricating oil fed to the raceway groove is discharged to outside of the thrust ball bearing.

With this configuration, the lubricating oil can be fed sufficiently to the thrust ball bearing and the lubricating oil fed to the thrust ball bearing can be discharged stably. This makes it possible to reduce a friction due to a viscosity resistance of the lubricating oil. Therefore, the balls are enabled to roll smoothly, and a lower noise and a higher efficiency of the sealed compressor can be attained.

### Advantageous Effects of Invention

A sealed compressor and a refrigeration unit including the sealed compressor the present invention are able to maintain smooth rotation of balls, and therefore, a higher efficiency of the sealed compressor can be attained.

### Brief Description of Drawings

[Fig. 1] Fig. 1 is a longitudinal sectional view of a sealed compressor according to Embodiment 1.
[Fig. 2] Fig. 2 is a schematic view showing a region D of Fig. 1 in an enlarging manner.
[Fig. 3] Fig. 3 is an exploded perspective view of a thrust ball bearing in the sealed compressor of Fig. 1.
[Fig. 4] Fig. 4 is a schematic view showing in an enlarging manner, major components of a sealed compressor according to modified example 1 of Embodiment 1.
[Fig. 5] Fig. 5 is an exploded perspective view of a thrust ball bearing in the sealed compressor of Fig. 4.
[Fig. 6] Fig. 6 is a schematic view showing in an enlarging manner, major components of a sealed compressor according to modified example 2 of Embodiment 1.
[Fig. 7] Fig. 7 is a longitudinal sectional view of a sealed compressor according to Embodiment 2.
[Fig. 8] Fig. 8 is a schematic view showing in an enlarging manner, major components of a sealed compressor according to Embodiment 3.
[Fig. 9] Fig. 9 is a schematic view showing a configuration of a refrigeration unit according to Embodiment 4.
[Fig. 10] Fig. 10 is a cross-sectional view taken along J-J of Fig. 9.

### Description of Embodiments

Hereinafter, a preferred embodiment of the present invention will be described with reference to the drawings. Throughout the drawings, the same or corresponding components are designated by the same reference symbols, and will not be described in repetition. In addition, throughout the drawings, components required to describe the present invention are depicted and the other components are not illustrated. Moreover, the present invention is not limited to the embodiments below.

### (Embodiment 1)

A sealed compressor according to Embodiment 1 comprises an electric component including a stator and a rotor; a compression component actuated by the electric component; and a sealed container accommodating the electric component and the compression component and storing lubricating oil for lubricating the compression component; wherein the compression component includes a shaft including a main shaft section to which the rotor is fastened and an eccentric shaft section, a cylinder block accommodating a piston reciprocatable according to rotation of the shaft, a main bearing unit mounted on the cylinder block to support the main shaft section, and a thrust ball bearing disposed between a flange surface formed in the shaft and a thrust surface formed in the main bearing unit; the main shaft section is provided with a first oil feeding passage to transport the lubricating oil from a lower portion of the main shaft section to an upper portion of the main shaft section; the thrust ball bearing includes a plurality of balls held in a cage, an upper race disposed such that one of its main surfaces is in contact with upper portions of the balls; and a lower race disposed such that one of its main surfaces is in contact with lower portions of the balls; the main surface of the upper race and the main surface of the lower race face each other; at least one of the main surface of the upper race and the main surface of the lower race, the main surfaces facing each other, is provided with a raceway groove which is formed by an annular groove, and in which the balls are placed; and the thrust ball bearing is provided with a second oil feeding passage communicated with the first oil feeding passage and configured to feed the lubricating oil to the raceway groove and a discharge passage through which the lubricating oil fed to the raceway groove is discharged to outside of the thrust ball bearing.

In the sealed compressor according to Embodiment 1, the thrust surface is defined by an inner bottom surface of a recess formed in a main surface which is an upper surface of a main bearing unit; and the main surface of the main bearing unit is disposed below a lower surface of the cage.

In the sealed compressor according to Embodiment 1, the cage has an inner diameter greater than an inner diameter of the upper race and an inner diameter of the lower race.

The sealed compressor according to Embodiment 1 further comprises an inverter unit; and the sealed compressor is actuated by the inverter unit by rotational speeds of two or more kinds, including a rotational speed lower than a power supply frequency.

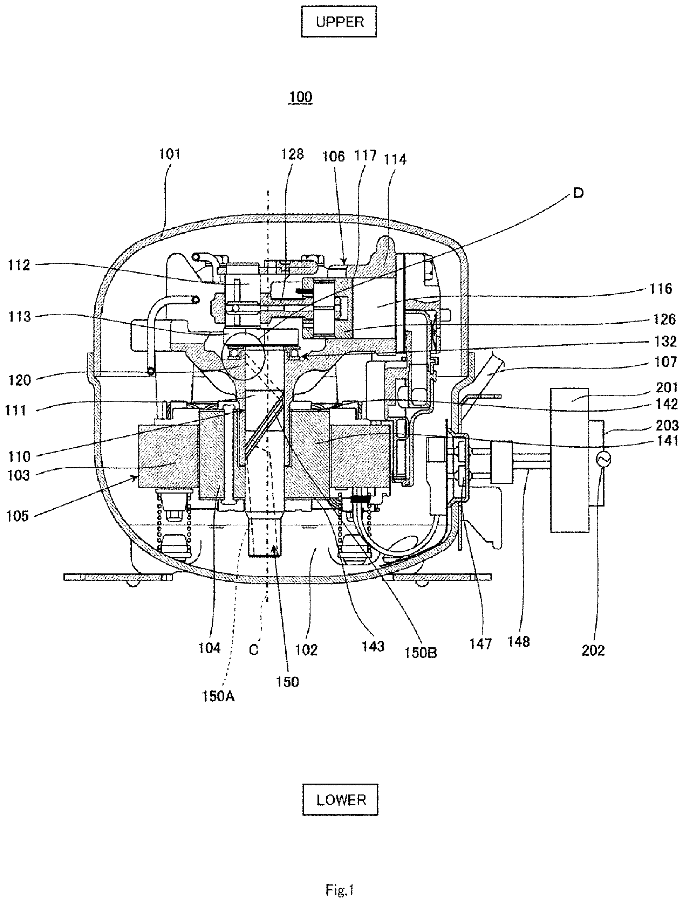

Hereinafter, an example of a sealed compressor according to Embodiment 1 will be described with reference to Figs. 1 to 3.

### [Configuration of sealed compressor]

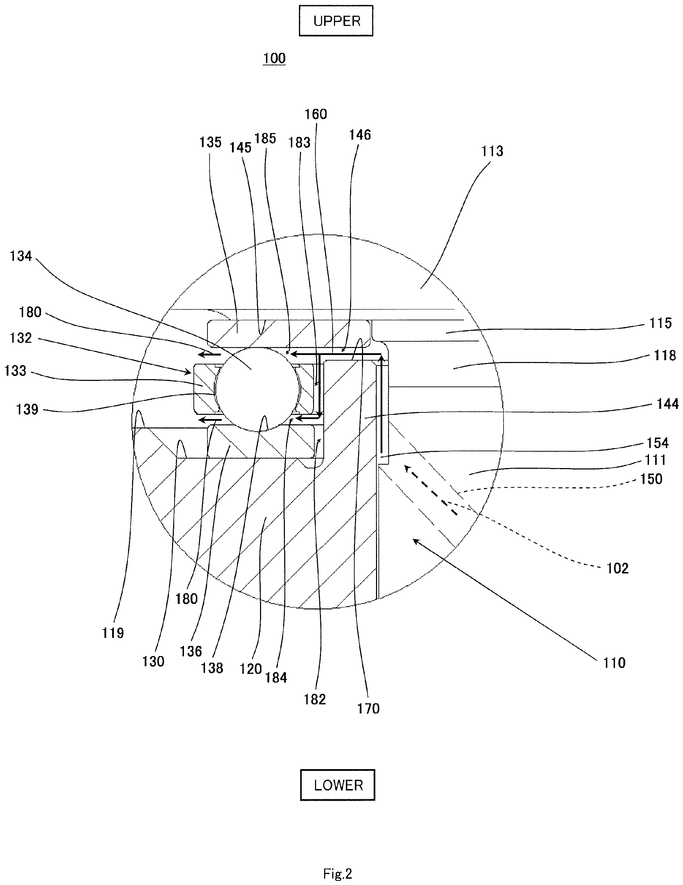

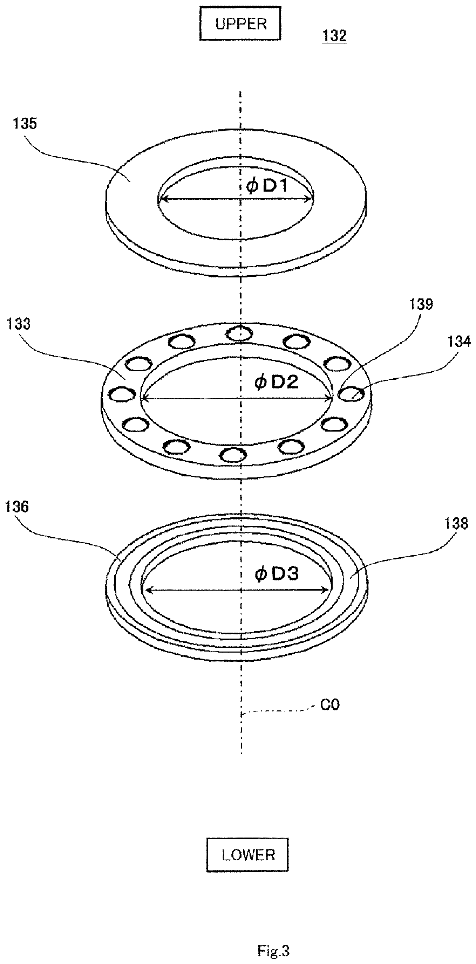

Fig. 1 is a longitudinal sectional view of a sealed compressor according to Embodiment 1. Fig. 2 is a schematic view showing a region D of Fig. 1 in an enlarging manner. Fig. 3 is an exploded perspective view of a thrust ball bearing in the sealed compressor of Fig. 1. In Figs. 1 to 3, upper and lower sides of the sealed compressor are depicted as upper and lower sides.

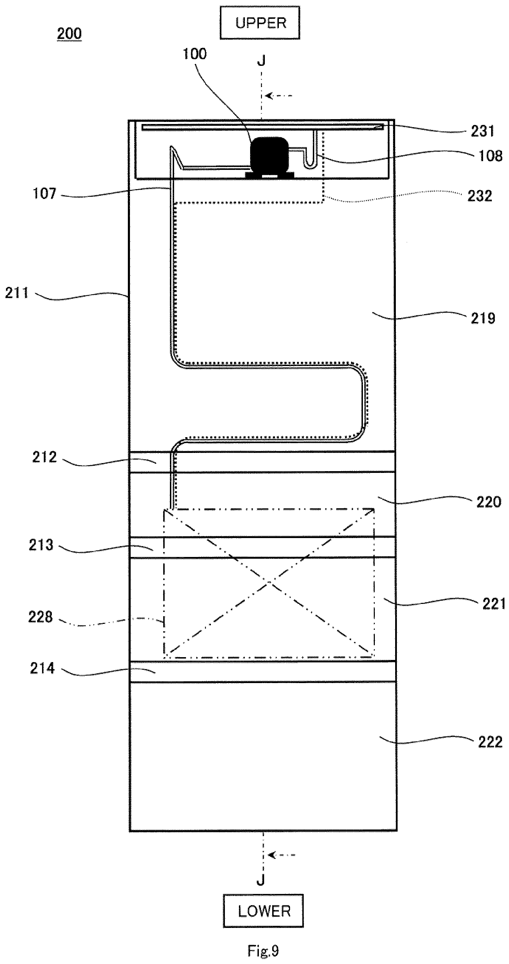

As shown in Fig. 1, a sealed compressor 100 of Embodiment 1 includes a sealed container 101. The sealed container 101 is provided with a suction pipe 107 and a discharge pipe 108 (see Fig. 9) penetrating a wall portion of the sealed container 101. An upstream end of the suction pipe 107 is connected to a cooler (evaporator) 228 (see Fig. 9), while a downstream end thereof is communicated with an interior of the sealed container 101. An upstream end of the discharge pipe 108 is communicated with a discharge muffler (not shown), while a downstream end thereof is connected to a condenser 231 (see Fig. 9).

A terminal 147 is fixed to the sealed container 101. The terminal 147 is electrically connected to an electric component 105 as will be described later, via an electric wire (not shown). The terminal 147 is electrically connected to an inverter unit 201 via a lead wire 148.

A utility power supply 202 is electrically connected to the inverter unit 201 via an electric wire 203. The inverter unit 201 is configured to control electric power supplied to the electric component 105 via the terminal 147. Thereby, the electric component 105 is driven by plural driving frequencies.

In a bottom portion of the sealed container 101, lubricating oil 102 is reserved to immerse a lower end portion of a main shaft section 111 of a shaft 110 as will be described later. Refrigerant (not shown) is filled into the sealed container 101. A compression component 106 for compressing and suctioning the refrigerant and the electric component 105 for actuating the compression component 106 are accommodated into the sealed container 101. In Embodiment 1, the compression component 106 is positioned above the electric component 105.

As the refrigerant, for example, HFC refrigerant or the like which has a low global warming potential (GWP), which is represented by R134a whose ozone depletion potential (ODP) is zero, may be used. As the lubricating oil 102, lubricating oil which has a high compatibility with the refrigerant may be used. Lubricating oil having a viscosity of VG3 to VG8 may be used.

The electric component 105 includes a stator 103 and a rotor 104. The rotor 104 includes a stack (not shown) in which a plurality of electromagnetic steel plates are stacked together, and a first member (not shown) and a second member (not shown) which sandwich the stack. The rotor 104 is fastened to the main shaft section 111 of the shaft 110 constituting the compression component 106 by shrink fit, etc..

The compression component 106 includes the shaft 110, a cylinder block 114, a piston 126, a connecting member 128 and a thrust ball bearing 132. The cylinder block 114 includes a cylinder 117 defining a compression chamber 116 of a substantially cylindrical shape, having a center axis extending horizontally, and a main bearing unit 120. A piston 126 is inserted into the cylinder 117. The piston 126 is coupled to the eccentric shaft section 112 of the shaft 110 via the connecting member 128.

The shaft 110 includes the main shaft section 111 having a center axis C extending vertically, the eccentric shaft section 112 having a center axis which is eccentric with respect to the main shaft section 111, and a joint section 113 for joining the main shaft section 111 to the eccentric shaft section 112. The main shaft section 111 is rotatably supported on the main bearing unit 120 of the cylinder block 114.

The thrust ball bearing 132 intervenes between the joint section 113 of the shaft 110 and the main bearing unit 120. In this structure, a weight of the shaft 110 and a weight of the rotor 104 are supported by the main bearing unit 120 via the thrust ball bearing 132. The thrust ball bearing 132 enables the shaft 110 to rotate smoothly.

Next, a configuration of the shaft 110, the main bearing unit 120 of the cylinder block 114 and the thrust ball bearing 132 will be described in greater detail, with reference to Figs. 1 to 3.

The joint section 113 of the shaft 110 has a substantially disc shape having a great wall thickness. The main shaft section 111 extends downward from a center portion of a lower main surface of the joint section 113. The eccentric shaft section 112 extends upward from a location in the vicinity of a peripheral portion of the upper main surface of the joint section 113. A flange surface (upper race seating surface) 145 is formed on the lower main surface of the joint section 113 such that the flange surface 145 is substantially orthogonal to the center axis C of the main shaft section 111. The flange surface 145 has a substantially circular shape around the main shaft section 111 when viewed from below.

A substantially disc-shaped guide section 115 is formed on an upper portion (lower portion of the flange surface 145) of the main shaft section 111. The guide section 115 has a center axis conforming to the center axis C of the main shaft section 111, and is concentric with the main shaft section 111. An outer peripheral surface of the guide section 115 protrudes outward (radially outward) farther than an outer peripheral surface of a portion of the main shaft section 111 which is other than the guide section 115. Specifically, the guide section 115 has an outer diameter which is greater than an outer diameter of the main shaft section 111, and is equal to or less than 105% of the outer diameter of the main shaft section 111.

A recess 118 is formed between the main shaft section 111 and the guide section 115. The recess 118 has an outer peripheral surface located inward relative to an outer peripheral surface of the main shaft section 111. The recess 118 has a groove shape which is recessed inward. During an operation of the sealed compressor 100, even when the shaft 110 vibrates, it becomes possible to prevent a situation in which a tip end portion of a bearing extending section 144 (described later) of the main bearing unit 120 and the main shaft section 111 of the shaft 110 contact each other, and thereby avoid damage to the main shaft section 111.

When viewed from above, the main bearing unit 120 of the cylinder block 114 has a ring-shaped (disc-shape having in a center an opening through which the main shaft section 111 is inserted). The main surface 119 has a recess extending circumferentially concentrically outside of the opening of the main bearing unit 120. A bottom surface of the recess defines a thrust surface (lower race seating surface) 130. The thrust surface 130 is configured to be orthogonal to a center axis of the main bearing unit 120 and has a ring shape when viewed from above. The cylindrical bearing extending section 144 is provided to extend vertically in an inner peripheral portion of the thrust surface 130 such that the bearing extending section 144 protrudes upward from the thrust surface 130.

An upper end 170 of the bearing extending section 144 is located between an upper end and a lower end of the recess 118 of the shaft 110. The upper end 170 of the bearing extending section 144 is located under a lower surface of an upper race 135 of the thrust ball bearing 132 as will be described later.

An inner peripheral upper end portion of the bearing extending section 144 is chamfered. In this structure, even when the shaft 110 and the tip end portion of the bearing extending section 144 contact each other, it becomes possible to avoid damage to the shaft 110.

A ring-shaped clearance 154 is formed between an inner peripheral surface of the bearing extending section 144 and an outer peripheral surface of the recess 118 of the shaft 110. Since the outer peripheral surface of the recess 118 is located inward relative to an outer peripheral surface of the main shaft section 111, the clearance 154 is formed such that its horizontal dimension is greater than that of the clearance formed between the inner peripheral surface of the bearing extending section 144 and the outer peripheral surface of the main shaft section 111 of the shaft 110.

The thrust ball bearing 132 is provided on the thrust surface 130. The thrust ball bearing 132 includes the upper race 135, a plurality of (12 in the present embodiment) balls 134, a cage 133 (holder section) for holding the balls 134, and a lower race 136. These members are arranged in the order of the lower race 136, the cage 133, and the upper race 135 in an upward direction from the thrust surface 130. More specifically, the bearing extending section 144 is inserted in an inner periphery of the lower race 136 and an inner periphery of the cage 133. The upper race 135 is disposed such that the main shaft section 111 (to be precise, guide section 115 and recess 118) are inserted in an inner periphery of the upper race 135.

The upper race 135 and the lower race 136 are made of, for example, thermally treated bearing steel so that their surface hardness falls within a range of HRC58 to 68, preferably HRC 58 to 62. The balls 134 are configured to have a surface hardness which is slightly higher than that of the upper race 135 and that of the lower race 136. Specifically, the balls 134 are made of, for example, case hardening bearing steel so that their surface hardness falls within a range of HRC60 to 70, preferably HRC62 to 67.

For this reason, it becomes possible to prevent the surfaces of the balls 134 from being abraded away soon. Therefore, it becomes possible to suppress a situation in which abrasions from the balls 134 contact the balls 134, the upper race 135 or the lower race 136, and thereby the balls 134, the upper race 135 or the lower race 136 is/are damaged. Thus, it becomes possible to avoid reduction of a life of the thrust ball bearing 132, and improve reliability of the thrust ball bearing 132.

The lower race 136 has a ring-shape (disc shape having an opening in a center portion thereof). A clearance 182 is formed between an inner peripheral surface of the lower race 136 and an outer peripheral surface of the bearing extending section 144. The lower race 136 has upper and lower main surfaces. The lower race 136 is disposed such that its lower main surface is in contact with the thrust surface 130. A clearance 184 is formed between the upper main surface (track surface) of the lower race 136 and the lower main surface of the cage 133.

The track surface of the lower race 136 is provided with an annular groove, which forms a raceway groove 138. The raceway groove 138 has a cross-section of a circular-arc shape to be similar to a contour shape (contour shape of the cross-section which is taken along a center of the balls 134) of the balls 134. The balls 134 are placed in the raceway groove 138 of the lower race 136.

The cage 133 has a ring shape (disc shape having an opening in a center portion thereof). A clearance 183 is formed between an inner peripheral surface of the cage 133 and an outer peripheral surface of the bearing extending section 144. The cage 133 has a pair of upper and lower main surfaces. A clearance 185 is formed between the upper main surface of the cage 133 and the lower main surface of the upper race 135.

The cage 133 is provided on the main surface with a plurality of (12, in the present embodiment) cage pockets 139. All of the cage pockets 139 are arranged to form a concentric circle with respect to the cage 133. The cage pockets 139 have circular openings. Inner peripheral surfaces of the cage pockets 139 are formed as curved surfaces similar to the contour shapes of the balls 134, respectively. The balls 134 are held in the cage pockets 139, respectively.

The cage 133 has a thickness smaller than a diameter of the balls 134. Because of this structure, upper portions of the balls 134 protrude farther than the upper surface of the cage 133, while lower portions of the balls 134 protrude farther than the lower surface of the cage 133.

The upper race 135 has a ring shape (disc shape having an opening in a center portion thereof), and has a pair of upper and lower main surfaces. The upper race 135 has an outer diameter greater than an outer diameter of the flange surface 145 and has an inner diameter smaller than an outer diameter of the bearing extending section 144.

The upper race 135 is disposed such that the upper main surface is in contact with the flange surface 145, and the lower main surface (track surface) is in contact with the upper portions of the balls 134. A height of the upper race 135, a height of the lower race 136, a diameter of the balls 134, and a depth of the raceway groove 138 are suitably set so that the thrust ball bearing 132 contacts the flange surface 145 and the thrust surface 130.

The height of the cage 133, the height of the upper race 135, the height of the lower race 136, the diameter of the balls 134 and the depth of the raceway groove 138 are suitably set so that the lower main surface of the cage 133 is located above the main surface 119 of the main bearing unit 120. In addition, a depth of the thrust surface 130 with respect to the main surface 119, and the height of the lower race 136 are suitably set so that the track surface of the lower race 136 is located above the main surface 119.

The upper race 135 is disposed to have a clearance 146 between its track surface and the upper end 170 of the bearing extending section 144. Thus, the upper race 135 and the upper end 170 of the bearing extending section 144 do not contact each other. This enables the balls 134 to roll smoothly between the upper race 135 and the lower race 136.

An inner diameter cpD2 of the cage 133 is set greater than an inner diameter ϕD1 of the upper race 135 and an inner diameter cpD3 of the lower race 136. The inner diameter ϕD1 of the upper race 135 is set smaller than the inner diameter cpD3 of the lower race 136. In other words, the upper race 135, the cage 133 and the lower race 136 are configured such that the inner diameter ϕD1 of the upper race 135 is smallest and the inner diameter cpD2 of the cage 133 is greatest.

### [Configuration of first oil feeding passage, second oil feeding passage, and discharge passage]

Next, configurations of a first oil feeding passage 150, a second oil feeding passage 160 and a discharge passage 180 in the sealed compressor 100 of Embodiment 1 will be described in detail with reference to Figs. 1 to 3.

The first oil feeding passage 150 is provided in the main shaft section 111, and includes a suction-up section 150A formed in a lower portion of the main shaft section 111 and a passage section 150B communicated with the suction-up section 150A.

The suction-up section 150A is formed by a recess. The recess extends upward inside of the main shaft section 111 from a lower end portion of the main shaft section 111 to a region in the vicinity of a center of the main shaft section 111. The recess is inclined with respect to the center axis C of the main shaft section 111.

The passage section 150B is formed in a peripheral surface of an upper portion of the main shaft section 111. The passage section 150B is formed by a groove extending upward in a spiral shape from the region in the vicinity of the center of the main shaft section 111. A through-hole is formed at a base end portion of the passage section 150B such that it is communicated with the suction-up section 150A. The passage section 150B extends to the recess 18 of the shaft 110 such that it is communicated with the clearance 154.

In the above described configuration, when the main shaft section 111 rotates, the lubricating oil 102 is suctioned up into the suction-up section 150A. Then, the lubricating oil 102 suctioned up into the suction-up section 150A is fed from the suction-up section 150A to the passage section 150B. Through the passage section 150B, the lubricating oil 102 is fed to the upper portion of the main shaft section 111.

The second oil feeding passage 160 is communicated with the first oil feeding passage 150 (branches from the first oil feeding passage 150), and includes the clearance 154, the clearance 146, the clearance 183, an inward space of the clearance 184 (space which is inward relative to the balls 134 and is at the center axis C side of the main shaft section 111), and an inward space of the clearance 185 (space which is inward relative to the balls 134 and is at the center axis C side of the main shaft section 111).

Since the clearance 154 is greater than the clearance formed between the inner peripheral surface of the bearing extending section 144 and the outer peripheral surface of the main shaft section 111 of the shaft 110, the lubricating oil 102 fed to the upper portion of the main shaft section 111 through the first oil feeding passage 150 is fed to the clearance 146 through the clearance 154. The lubricating oil 102 fed to the clearance 146 is divided to flow into the clearance 185 and the clearance 183.

The lubricating oil 102 flowing to the clearance 185 is fed to the track surface of the upper race 135, the surfaces of the balls 134, the upper surface of the cage 133 and the cage pockets 139. The lubricating oil 102 fed to the clearance 183 is fed to the raceway groove 138 of the lower race 136, the surfaces of the balls 134, the lower surface of the cage 133, and the cage pockets 139, through the clearance 184.

The discharge passage 180 includes a space of the clearance 184 which is located outward relative to the ball 134, and a space of the clearance 185 which is located outward relative to the ball 134. In this structure, a surplus portion of the lubricating oil 102 fed to the thrust ball bearing 132 is discharged to outside of the thrust ball bearing 132 through the discharge passage 180, due to a centrifugal force associated with the rotation of the main shaft section 111, a centrifugal force associated with the rotation of the balls 134, etc..

### [Operation of sealed compressor]

Next, an operation of the sealed compressor 100 of Embodiment 1 will be described with reference to Figs. 1 to 3.

Initially, the inverter unit 201 supplies the electric power supplied from the utility power supply 202 to the stator 103 of the electric component 105 via the lead wire 148, the terminal 147, or the like. This causes a magnetic field to be generated in the stator 103 and the rotor 104 to rotate, thereby causing the shaft 110 fastened to the rotator 104 to rotate.

At this time, the balls 134 roll between the upper race 135 and the lower race 136. Therefore, it becomes possible to suppress a sliding loss of the shaft 110, and reduce torque for rotating the shaft 110. Thus, the electric power supplied to the electric component 105 can be reduced, and hence a higher efficiency of the sealed compressor 100 can be achieved.

According to the rotation of the shaft 110, the piston 126 connected to the eccentric shaft section 112 via the connecting member 128 reciprocates within the cylinder 117. According to the reciprocation motion of the piston 126, the refrigerant is suctioned into the compression chamber 116 through a cooling cycle, the suction pipe 107 and the suction muffler. The refrigerant is compressed in the compression chamber 116 and then is discharged from the discharge muffler. The refrigerant flows to the cooling cycle through the discharge pipe 108.

According to the rotation of the shaft 110, the main shaft section 111 rotates, and the suction-up section 150A suctions up the lubricating oil 102. The lubricating oil 102 suctioned up to the suction-up section 150A is fed from the suction-up section 150A to the passage section 150B, and fed to the upper portion of the main shaft section 111 through the passage section 150B.

The lubricating oil 102 fed to the upper portion of the main shaft section 111 is fed to an interior of the thrust ball bearing 132 through the second oil feeding passage 160. The lubricating oil 102 fed to the interior of the thrust ball bearing 132 is discharged to outside of the thrust ball bearing 132 through the discharge passage 180 and returns to the bottom portion of the sealed container 101.

### [Advantage of sealed compressor]

Next, advantages achieved by the sealed compressor 100 of Embodiment 1 will be described with reference to Figs. 1 to 3.

In the sealed compressor 100 of Embodiment 1, the second oil feeding passage 160 communicated with the first oil feeding passage 150 is provided. This makes it possible to stably feed the lubricating oil 102 to the interior of the thrust ball bearing 132.

In the sealed compressor 100 of Embodiment 1, the raceway groove 138 having the circular-arc cross-section is formed on track surface of the lower race 136. Because of this, the lubricating oil 102 fed to the track surface of the lower race 136 through the first oil feeding passage 150 and the second oil feeding passage 160 stays in the raceway groove 138, so that the lubricating oil 102 is fed stably to the surfaces of the balls 134.

In this way, the lubricating oil 102 is fed stably to the portions of the balls 134 and the portion of the upper race 135, which portions are in contact with each other, and the portions of the balls 134 and the portion of the lower race 136, which portions are in contact with each other. As a result, a sliding loss generated in the thrust ball bearing 132 can be reduced. Thus, it becomes possible to implement the compressor which generates a less noise and has a higher efficiency.

Furthermore, in the sealed compressor 100 of Embodiment 1, the discharge passage 180 is provided inside of the thrust ball bearing 132. This enables a surplus portion of the lubricating oil 102 to be quickly discharged to outside of the thrust ball bearing 132 through the discharge passage 180. As a result, it becomes possible to suppress a situation in which the balls 134 are immersed in the lubricating oil 102, and the rolling of the balls 134 is impeded due to a viscosity resistance of the lubricating oil 102. Moreover, it becomes possible to maintain a state in which a thin oil film is formed on the surfaces of the balls 134.

Therefore, the balls 134 can roll smoothly, and the low-noise and high-efficient sealed compressor 100 can be attained.

Since the lubricating oil 102 is discharged through the discharge passage 180, circulation of the lubricating oil 102 is facilitated. This makes it possible to increase the efficiency with which the thrust ball bearing 132 is cooled by the lubricating oil 102.

Even when an abrasion powder is generated due to abrasion of the inner peripheral surface of the cage 133, or the like, the generated abrasion powder can be discharged to outside of the thrust ball bearing 132 together with the lubricating oil 102. Therefore, it becomes possible to suppress damages to the balls 134, the upper race 135 and the lower race 136, and to avoid reduction of a life of the thrust ball bearing 132, and improve reliability of the thrust ball bearing 132.

As compared to the case where the lower race 136 of a flat plate shape is used, in the structure in which the lower race 136 is provided with the raceway groove 138, the area of the portions of the balls 134 and the portion of the lower race 136, which portions are in contact with each other, can be increased, and thus a thrust load applied by the rotor 104, the shaft 110, and the like to the contact portions can be dispersed (lessened). Thus, it becomes possible to suppress a situation in which a stress is applied intensively to the portions of the balls 134 and the portion of the lower race 136 which portions are in contact with each other.

Even when an impact is exerted on the sealed compressor 100 at the time of transportation of the sealed compressor 100, and a load is applied excessively in a vertical direction to the portions of the balls 134 and the portion of the lower race 136, which portions are in contact with each other, it becomes possible to suppress a situation in which a load is applied to a localized portion of the track surface (raceway groove 138) of the lower race 136. Since it becomes possible to suppress the load from being applied to the localized portion in this way, it becomes possible to suppress a situation in which the balls 134 and the lower race 136 are damaged, deformed, etc.. As a result, smooth rotation of the balls 134 can be maintained.

Moreover, in the sealed compressor 100 of Embodiment 1, the inner diameter *φ*D2 of the cage 133 is set greater than the inner diameter *φ*D1 of the upper race 135 and the inner diameter *φ*D3 of the lower race 136.

In this setting, it becomes possible to suppress a situation in which the cage 133 contacts another member (e.g., bearing extending section 144), and suppress a sliding loss due to contact with the cage 133, the bearing extending section 144, etc.. As a result, efficiency of the thrust ball bearing 132 can be increased, and reliability of the thrust ball bearing 132 can be improved.

Furthermore, in the sealed compressor 100 of Embodiment 1, the lower main surface of the cage 133 is located above the main surface 119 of the main bearing unit 120, and the track surface of the lower race 136 is located above the main surface 119. Therefore, even if the lubricating oil 102 discharged from the discharge passage 180 stays in the recess defining the thrust surface 130, it becomes possible to suppress a situation in which the track surface of the lower race 136 is immersed in the lubricating oil 102.

Therefore, it becomes possible to suppress the balls 134 from being immersed in the lubricating oil 102, and reduce a fiction due to the viscosity resistance of the lubricating oil 102. Also, it becomes possible to maintain a state in which a thin oil film is formed on the surfaces of the balls 134.

In the case of the lubricating oil 102 of a low viscosity such as VG3 to VG8, the oil film of which is likely to be discontinued, in the portions of the balls 134, and the portion of the upper race 135 or the portion of the lower race 136, which portions are in contact with each other.

Next, the advantages achieved when the sealed compressor 100 is actuated by the inverter unit 201 will be described.

For example, in a case where a utility power supply frequency is 50HZ and the sealed compressor 100 is actuated at a rated constant rotational speed by the inverter unit 201, the compressor 100 is actuated at 50 revolutions per second. In a case where the sealed compressor 100 can be actuated by the inverter unit 201 at plural rotational speeds, it can be actuated at predetermined plural rotational speeds in a wide range, which are, for example, 20 revolutions, 35 revolutions, 40 revolutions, 50 revolutions, 60 revolutions, 75 revolutions, and 80 revolutions.

Even in a case where the sealed compressor 100 is run by the inverter unit 201 at a frequency which is equal to or lower than the utility power supply frequency (run at a low speed), the lubricating oil 102 can be sufficiently fed to the thrust ball bearing 132 through the first oil feeding passage 150 and the second oil feeding passage 160. Because of this, smooth rotation of the balls 134 can be maintained, generation of a noise can be suppressed, and the efficiency of the sealed compressor 100 can be made higher.

The oil can be directly fed from the shaft 110 to the raceway groove 138. Therefore, improvement is remarkable in the case of rotation at a low speed which is 20r/s or less, during which the lubricating oil 102 tends to be insufficient.

In a case where the sealed compressor 100 is actuated by the inverter unit 201 at a rotational speed higher than the rated rotational speed, a centrifugal force applied to the shaft 110 (main shaft section 111) increases, and the lubricating oil 102 is fed with an increased rate to the thrust ball bearing 132 through the first oil feeding passage 150 and the second oil feeding passage 160. Therefore, the lubricating oil 102 can be sufficiently fed to the thrust ball bearing 132. As a result, the smooth rotation of the balls 134 can be maintained, generation of a noise can be suppressed, and the efficiency of the sealed compressor 100 can be made higher.

Especially, during rotation at a high speed which is 70r/s or more, the lubricating oil 102 scatters due to a centrifugal force and is not easily fed to the raceway groove 138, when the lubricating oil 102 is fed by splash lubrication from outside of the thrust ball bearing 132. However, since the oil is fed to the raceway groove 138 from inside of the thrust ball bearing 132, oil feeding is carried out stably.

As described above, in the present embodiment, the running rotational speed range is set to a value between 17r/s and 80r/s. Within this running rotational speed range, a higher efficiency or a good noise-proof characteristic can be attained.

Since the centrifugal force applied to the main shaft section 111 increases, the flow rate of the lubricating oil 102 discharged from the discharge passage 180 increases correspondingly, and a circulation efficiency of the lubricating oil 102 increases. As a result, the smooth rotation of the balls 134 can be maintained more effectively, generation of a noise can be suppressed, and a higher efficiency of the sealed compressor 100 can be achieved.

In the sealed compressor 100 of Embodiment 1, the compression component 106 is positioned above the electric component 105. The compression component 106 may be positioned below the electric component 105.

In the sealed compressor 100 of Embodiment 1, the main bearing unit 120 is provided with the bearing extending section 144. The main bearing unit 120 may not be provided with the bearing extending section 144.

Furthermore, in Embodiment 1, a support member may be provided between the thrust surface 130 and the lower race 136. As the support member, a wave washer having a high stiffness, a hard elastic member, etc., may be used.

### [Modified example 1]

Next, modified examples of the sealed compressor 100 according to Embodiment 1 will be described.

In the sealed compressor of modified example 1 of Embodiment 1, the upper race and the lower race have main surfaces which face each other, the main surface of the upper race and the main surface of the lower race are provided with raceway grooves formed by annular grooves, respectively, and balls are placed in the raceway groove of the upper race and the raceway groove of the lower race.

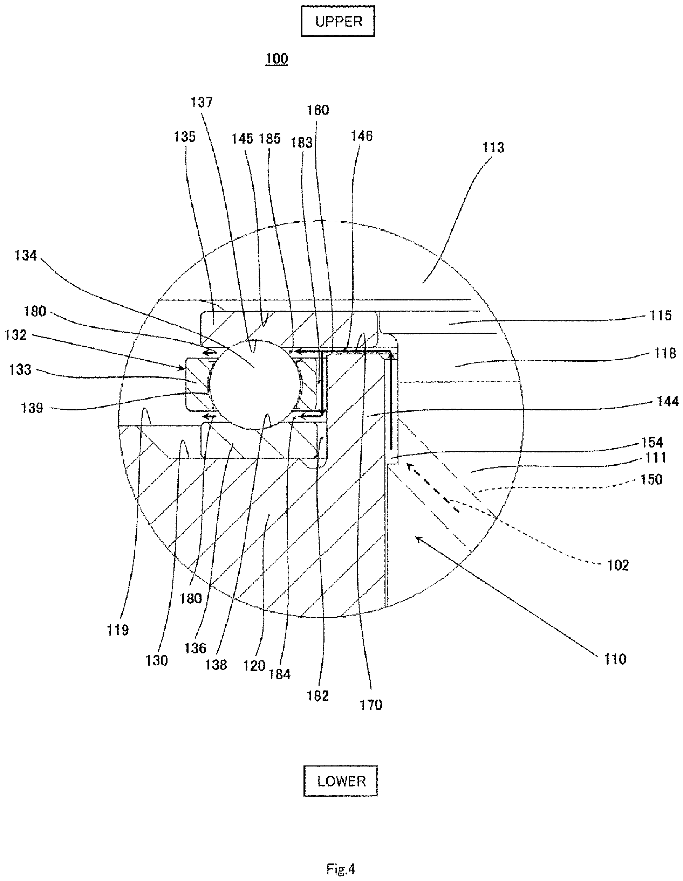

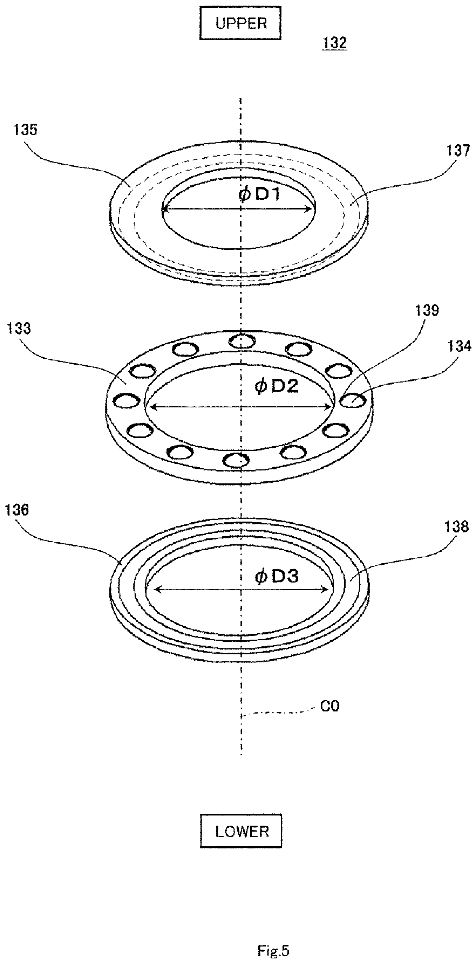

Hereinafter, an example of the sealed compressor of modified example 1 will be described with reference to Figs. 4 and 5.

Fig. 4 is a schematic view showing in an enlarging manner, major components of the sealed compressor according to modified example 1 of Embodiment 1. Fig. 5 is an exploded perspective view of a thrust ball bearing in the sealed compressor of Fig. 4. In Figs. 1 and 4, upper and lower sides of the sealed compressor are depicted as upper and lower sides.

As shown in Figs. 4 and 5, the sealed compressor 100 of modified example 1 has basically the same configuration as that of the sealed compressor 100 of Embodiment 1 except that the raceway groove 137 is provided on the track surface of the upper race 135.

Specifically, the annular groove formed on the track surface of the upper race 135 constitutes the raceway groove 137. The raceway groove 137 has a circular-arc shape such that its cross-sectional shape is similar to a contour shape of the balls 134. The raceway groove 137 is configured such that its center axis conforms to a center axis of the raceway groove 138, and its inner and outer diameters conform to inner and outer diameters of the raceway groove 138, respectively.

The sealed compressor 100 of modified example 1 configured as described above can achieve the same advantages as those of the sealed compressor 100 of Embodiment 1.

In addition, in the sealed compressor 100 of modified example 1, since the raceway groove 137 is provided on the upper race 135, the lubricating oil 102 staying in the raceway groove 138 is also fed to the raceway groove 137 of the upper race 135 by the rotation of the balls 134. This makes it possible to stably feed the lubricating oil 102 to the surfaces of the balls 134. In this structure, as compared to the sealed compressor 100 of Embodiment 1, the lubricating oil 102 can be stably fed to the portions of the balls 134 and the portion of the upper race 135, which portions are in contact with each other, and the portions of the balls 134 and the portion of the lower race 136, which portions are in contact with each other. Thus, a sliding loss generated in the thrust ball bearing 132 can be reduced. As a result, it becomes possible to implement the compressor which generates a less noise and has a higher efficiency.

As compared to the case where the upper race 135 of a flat plate shape is used, the area of the portions of the balls 134 and the portion of the upper race 135, which portions are in contact with each other, can be increased, and thus a thrust load applied by the rotor 104, the shaft 110, and the like to the contact portions can be dispersed (lessened). Thus, it becomes possible to suppress a situation in which a stress is applied intensively to the portions of the balls 134 and the portion of the upper race 135, which portions are in contact with each other.

Even when an impact is exerted on the sealed compressor 100 at the time of transportation of the sealed compressor 100, and a load is applied excessively in a vertical direction to the portions of the balls 134 and the portion of the upper race 135, which portions are in contact with each other, it becomes possible to suppress a situation in which a load is applied to a localized portion of the track surface (raceway groove 137) of the upper race 135. Since it becomes possible to suppress the load from being applied to the localized portion in this way, it becomes possible to suppress a situation in which the balls 134 and the upper race 135 are damaged, deformed, etc.. As a result, smooth rotation of the balls 134 can be maintained.

### [Modified example 2]

In a sealed compressor of modified example 2 of Embodiment 1, the upper race and the lower race have main surfaces which face each other, the main surface of the upper race is provided with the raceway groove formed by the annular groove, and the balls are placed in the raceway groove of the upper race.

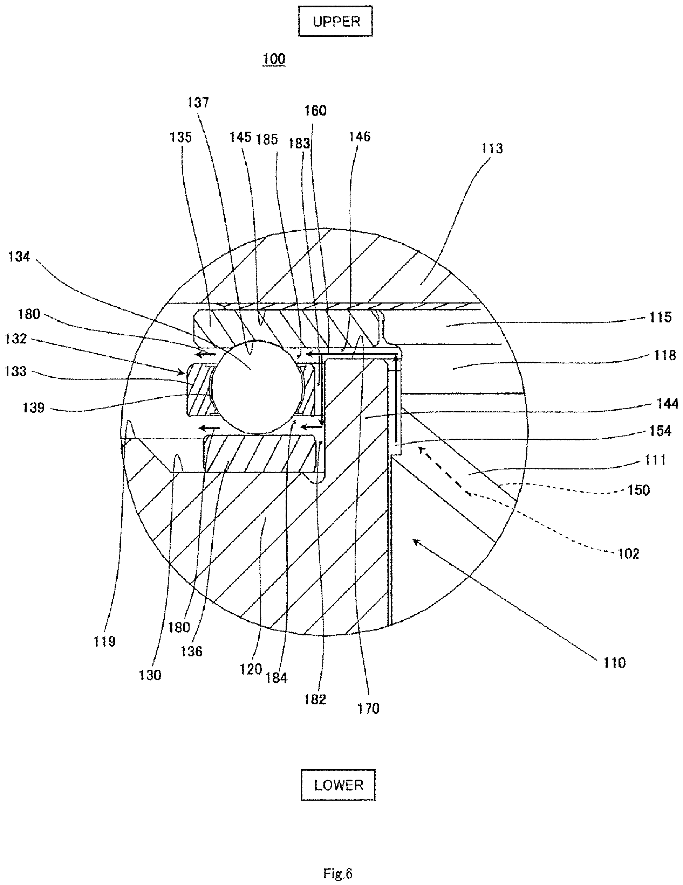

Hereinafter, an example of the sealed compressor of modified example 1 will be described with reference to Fig. 6.

Fig. 6 is a schematic view showing in an enlarging manner, major components of the sealed compressor according to modified example 2 of Embodiment 1. In Fig. 6, upper and lower sides of the sealed compressor are depicted as upper and lower sides.

As shown in Fig. 6, the sealed compressor 100 of modified example 2 has basically the same configuration as that of the sealed compressor 100 of Embodiment 1 except that the raceway groove 137 is provided on the track surface of the upper race 135, and the raceway groove 138 is not provided on the track surface of the lower race 136.

The sealed compressor 100 of modified example 2 configured as described above can achieve the same advantages as those of the sealed compressor 100 of Embodiment 1.

In addition, in the sealed compressor 100 of modified example 2, since the upper race 135 is provided with the raceway groove 137, the lubricating oil 102 fed to the upper surface of the cage 133 and the balls 134 through the second oil feeding passage 160, is further fed to the raceway groove 137 of the upper race 135 by the rotation of the balls 134. This makes it possible to stably feed the lubricating oil 102 to the surfaces of the balls 134. In this structure, the lubricating oil 102 can be stably fed to the portions of the balls 134 and the portion of the upper race 135, which portions are in contact with each other, and the portions of the balls 134 and the portion of the lower race 136, which portions are in contact with each other. Thus, a sliding loss generated in the thrust ball bearing 132 can be reduced. As a result, it becomes possible to implement the compressor which generates a less noise and has a higher efficiency.

As compared to the case where the upper race 135 of a flat plate shape is used, the area of the portions of the balls 134 and the portion of the upper race 135, which portions are in contact with each other, can be increased, and thus a thrust load applied by the rotor 104, the shaft 110, and the like to the contact portions can be dispersed (lessened). Thus, it becomes possible to suppress a situation in which a stress is applied intensively to the portions of the balls 134 and the portion of the upper race 135, which portions are in contact with each other.

Even when an impact is exerted on the sealed compressor 100 at the time of transportation of the sealed compressor 100, and a load is applied excessively in a vertical direction to the portions of the balls 134 and the portion of the upper race 135, which portions are in contact with each other, it becomes possible to suppress a situation in which a load is applied to a localized portion of the track surface (raceway groove 137) of the upper race 135. Since it becomes possible to suppress the load from being applied to the localized portion in this way, it becomes possible to suppress a situation in which the balls 134 and the upper race 135 are damaged, deformed, etc.. As a result, smooth rotation of the balls 134 can be maintained.

### (Embodiment 2)

A sealed compressor of Embodiment 2 further comprises a snubber provided at a lower portion of an electric and compression component including an electric component and a compression component, a shell snubber provided at an inner bottom surface of the sealed container such that the shell snubber faces the snubber, and a coil spring for elastically supporting the electric and compression component, and a distance between a lower end portion of the shaft and the inner bottom surface of the sealed container is greater than a distance between a lower end of the snubber and an upper end of the shell snubber.

Technical features in Embodiment 2 may be combined with technical features described in Embodiment 1.

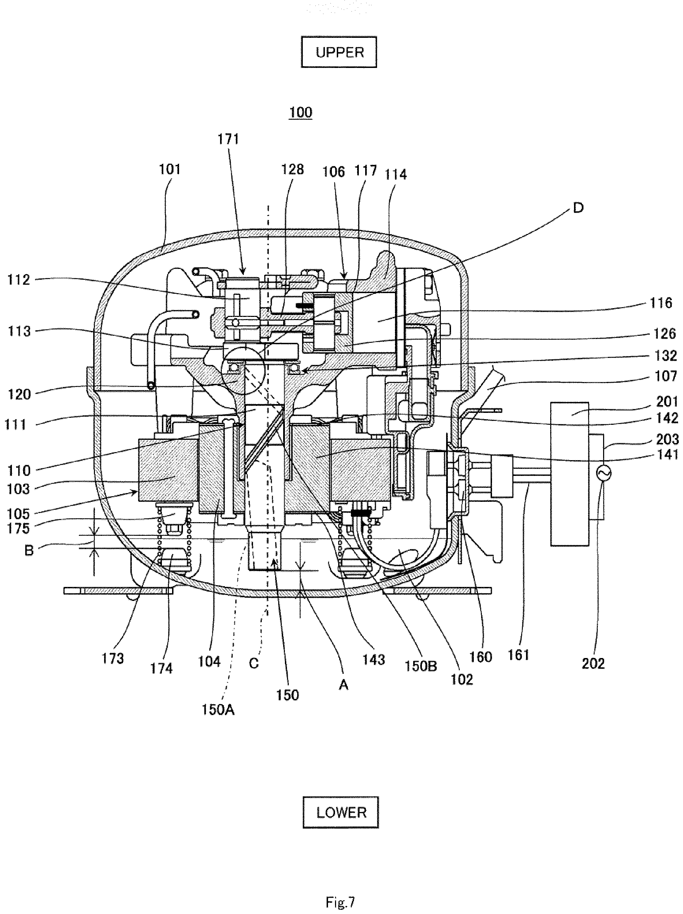

Hereinafter, an example of the sealed compressor of Embodiment 2 will be described with reference to Fig. 7.

Fig. 7 is a longitudinal sectional view of the sealed compressor according to Embodiment 2. In Fig. 7, upper and lower sides of the sealed compressor are depicted as upper and lower sides.

As shown in Fig. 7, the sealed compressor 100 of Embodiment 2 has basically the same configuration as that of the sealed compressor 100 of Embodiment 1 except that the sealed compressor 100 of Embodiment 2 further includes snubbers (buffer) 175, shell snubbers (buffer) 174, and coil springs 173.

Specifically, the snubbers 175 are provided in plural locations (e.g., four locations) at a lower portion of an electric and compression component 171 including the electric component 105 and the compression component 106. More specifically, the snubbers 175 are provided at the lower end of the stator 103. The shell snubbers 174 are provided at the inner bottom surface of the sealed container 101 so as to face the snubbers 175, respectively. The coil springs 173 are placed such that the snubbers 175 and the shell snubbers 174 are inserted into the coil springs 173, respectively, and elastically support the electric and compression component 171.

The snubbers 175 and the shell snubbers 174 are configured such that a distance A between the lower end of the shaft 110 (to be precise, main shaft section 111) and the inner bottom surface of the sealed container 101 is greater than a distance B between the lower end of the snubber 175 and the upper end of the shell snubber 174.

The sealed compressor 100 of Embodiment 2 configured as described above can achieve the same advantages as those of the sealed compressor 100 of Embodiment 1.

In addition, in the sealed compressor 100 of Embodiment 2, the snubbers 175 and the shell snubbers 174 are configured such that a distance A between the lower end of the shaft 110 (to be precise, main shaft section 111) and the inner bottom surface of the sealed container 101 is greater than a distance B between the lower end of each of the snubbers 175 and the upper end of the corresponding shell snubber 174.

Therefore, at the time of transportation of the sealed compressor 100, or the like, when a great external force is applied to the whole sealed compressor 100, the lower end of the snubber 175 and the upper end of the shell snubber 174 contact each other, before the lower end of the shaft 110 (to be precise, main shaft section 111) and the inner bottom surface of the sealed container 101 contact each other. This makes it possible to protect the lower portion of the main shaft section 111 which is provided with the suction-up section 150A, and prevent a situation in which the main shaft section 111 is damaged and thereby oil feeding to the thrust ball bearing 132 is impeded.

At the time of transportation of the sealed compressor 100, or the like, even when a great external force is applied in a vertical direction to the sealed compressor 100, all of the balls 134 are placed within the grooves of the raceway grooves 137, 138, and are stably in contact with the curved surfaces of the raceway grooves, as described in Embodiment 1.

At a moment when the lower end of the snubber 175 and the upper end of the shell snubber 174 contact each other, by a great external force at the time of transportation or the like, an inertia force corresponding to a mass of the shaft 110 or the rotor 104 is exerted as an impact on the portions of the balls 134 and the portion of the upper race 135, which portions are in contact with each other, and the portions of the balls 134 and the portion of the lower race 136, which portions are in contact with each other. In that case, in the conventional flat race, the area of the portions of the balls 134 and the portion of the race, which portions are in contact with each other, is small. This causes a possibility that an impact load is exerted on a part of them and a dent is formed in the race(s).

If such a dent is formed in the race(s), smooth rotation of the balls 134 is more likely to be impeded and a sliding noise is more likely to increase. However, the raceway groove 137 formed by the annular groove and the balls 134 are in contact with each other, and therefore the area of the portions of the balls 134 and the portion of the upper race 135, which portions are in contact with each other, and the area of the portions of the balls 134 and the portion of the lower race 136, which portions are in contact with each other, are great, and hence the impact load is dispersed by the great contact area. Therefore, a dent is less likely to be formed in the upper race 135 and in the lower race 136.

Therefore, even when a great force is exerted on the sealed compressor 100 at the time of transportation or the like, it becomes possible to suppress damages to the lower portion of the shaft 110, and a dent in the upper race 135 and the lower race 136.

### (Embodiment 3)

A sealed compressor of Embodiment 3 designed according to the invention, is configured such that the thrust surface is provided with a discharge hole to discharge the lubricating oil.

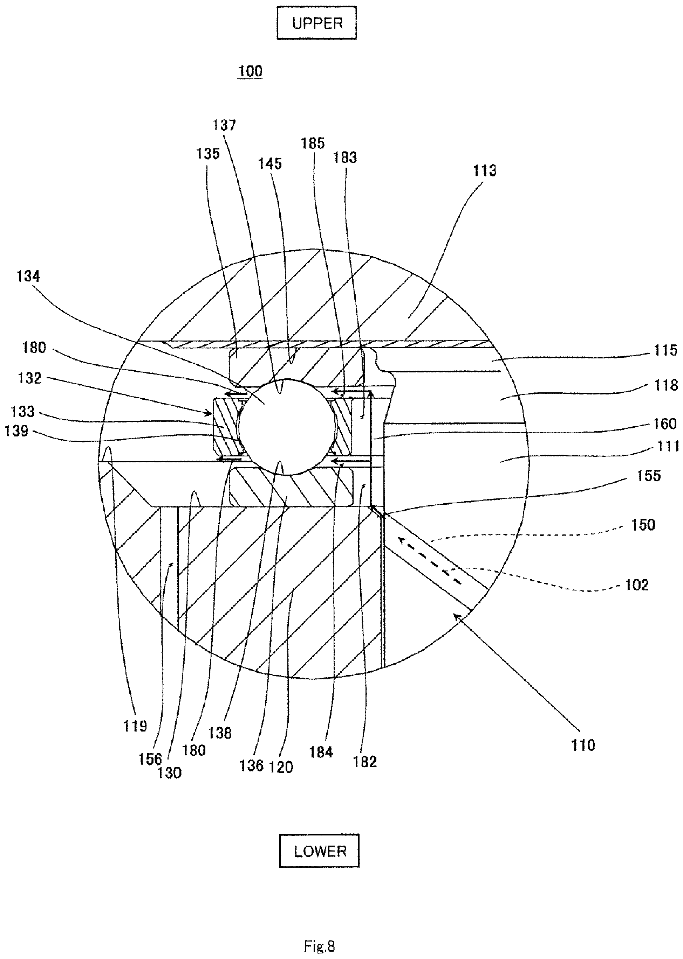

Hereinafter, an example of the sealed compressor according to Embodiment 3 will be described with reference to Fig. 8.

Fig. 8 is a schematic view showing in an enlarging manner, major components of the sealed compressor according to Embodiment 2. In Fig. 8, upper and lower sides of the sealed compressor are depicted as upper and lower sides.

As shown in Fig. 8, the sealed compressor 100 of Embodiment 3 has basically the same configuration as that of the sealed compressor 100 of Embodiment 1 except that the raceway groove 137 is provided on the track surface of the upper race 135, the bearing extending section 144 is not provided, and the thrust surface 130 of the main bearing unit 120 has a hollow portion 155 and a discharge hole 156.

Specifically, the hollow portion 155 is provided at a corner portion of the thrust surface 130 and the inner peripheral surface of the main bearing unit 120. More specifically, the hollow portion 155 is formed such that a passage resistance between the hollow portion 155 and the outer peripheral surface of the main shaft section 111 is smaller than a passage resistance between the inner peripheral surface of the main bearing unit 120 and the outer peripheral surface of the main shaft section 111. This allows the lubricating oil 102 which has flowed through the first oil feeding passage 150 to flow easily to the clearance 182.

The discharge hole 156 is provided such that the thrust surface 130 of the main bearing unit 120 is communicated with the lower end of the main bearing unit 120 (discharge hole 156 vertically penetrates the main bearing unit 120 through the thrust surface 130). In other words, the discharge hole 156 is configured such that the lubricating oil 102 is discharged to the inner bottom surface of the sealed container 101 through the discharge hole 156 to prevent the lubricating oil 102 from staying in the recess defining the thrust surface 130.

More specifically, the discharge hole 156 extends vertically such that its upper end is located outward relative to a portion of the thrust surface 130 at which the lower race 136 is placed. A passage cross-sectional area of the discharge hole 156 is set as desired in light of a flow rate of the lubricating oil 102 fed to the thrust ball bearing 132, a viscosity of the lubricating oil 102, etc..

Alternatively, the discharge hole 156 may be provided in the vicinity of an outer edge of the thrust surface 130 (in the vicinity of a base portion of a side wall of the recess defining the thrust surface 130). This allows the lubricating oil 102 discharged from the discharge passage 108 to be smoothly guided to the discharge hole 156.

A plurality of discharge holes 156 may be provided. For example, the plurality of discharge holes 156 may be arranged in the thrust surface 130 in a circumferential direction. Or, the discharge hole 156 may be inclined with respect to a vertical direction. For example, the discharge hole 156 may be inclined to be away from the center axis of the main bearing unit 120 in a downward direction.

The sealed compressor 100 of Embodiment 3 configured as described above can achieve the same advantages as those of the sealed compressor 100 of Embodiment 1.

In the sealed compressor 100 of Embodiment 3, a distance (horizontal length of the clearance 182) between the inner peripheral surface of the lower race 136 and the outer peripheral surface of the main shaft section 111, and a distance (horizontal length of the clearance 183) between the inner peripheral surface of the cage 133 and the outer peripheral surface of the main shaft section 111, are set greater than a distance (vertical length of the clearance 184) between the track surface of the lower race 136 and the lower surface of the cage 133. Because of this, a passage resistance in the clearance 182 and a passage resistance in the clearance 183 are smaller than a passage resistance in the clearance 184.

This allows the lubricating oil 102 fed to the clearance 182 through the first oil feeding passage 150 to easily flow from the clearance 182 to the clearance 183. Therefore, the lubricating oil 102 can be fed to both of the clearance 184 and the clearance 185. Thus, the lubricating oil 102 can be fed sufficiently to the track surface of the upper race 135 and the track surface of the lower race 136.

Furthermore, in the sealed compressor 100 of Embodiment 3, the lubricating oil 102 discharged from the discharge passage 180 of the thrust ball bearing 132 can be discharged through the discharge hole 156 more efficiently to the inner bottom surface of the sealed container 101.

Therefore, the sealed compressor 100 of Embodiment 3 is able to attain a higher circulation efficiency of the lubricating oil 102, suppress generation of a noise more effectively, and attain a higher efficiency of the sealed compressor 100, as compared to the sealed compressor 100 of Embodiment 1.

By the way, during a stopped state of the sealed compressor 100, when the temperature in the interior of the sealed compressor 100 is lowered, the viscosity of the lubricating oil 102 increases. For this reason, if the lubricating oil 102 is accumulated in the thrust ball bearing 132, electric power consumed to initiate running of the sealed compressor 100 in this state increases.

However, in the sealed compressor 100 of Embodiment 3, because of the presence of the discharge hole 156, it becomes possible to prevent a situation in which the lubricating oil 102 is accumulated with an excessive amount in the thrust ball bearing 132. This makes it possible to reduce electric power consumed to start-up the sealed compressor 100 even when the temperature of the sealed compressor 100 is lowered during the stopped state of the sealed compressor 100.

Although in Embodiment 3, the main surface 119 of the main bearing unit 120 is configured to be higher than the track surface of the lower race 136, the present invention is not limited to this. The main surface 119 of the main bearing unit 120 may be configured to be lower than the track surface of the lower race 136. Although in Embodiment 3, the bearing extending section 144 is not provided, the present invention is not limited to this, and the bearing extending section 144 may be provided.

### (Embodiment 4)

A refrigeration unit of Embodiment 4 includes the sealed compressor according to any one of Embodiments 1 to 3 (including modified examples).

### [Configuration of refrigeration unit]

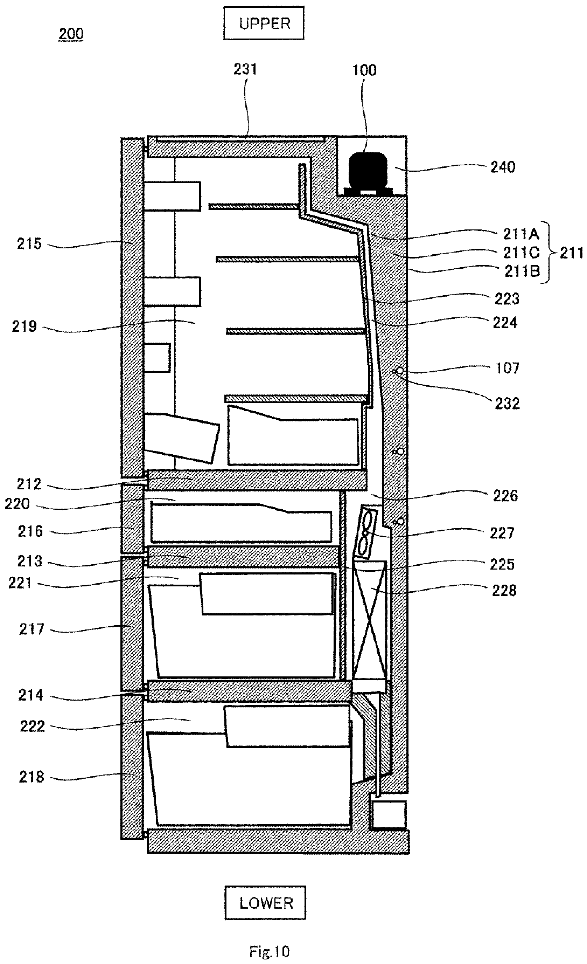

Fig. 9 is a view schematically showing a configuration of a refrigeration unit according to Embodiment 4. Fig. 10 is a cross-sectional view taken along J-J of Fig. 9. In Figs. 9 and 10, upper and lower sides of the refrigeration unit are depicted as upper and lower sides.

Referring to Figs. 9 and 10, a refrigeration unit 200 according to Embodiment 4 includes the sealed compressor 100 according to Embodiment 1 and a casing 211. The casing 211 includes an inner casing 211A manufactured by vacuum-molding using a resin such as ABS resin, an outer casing 211B made of metal such as a pre-coat steel plate, and a foamed heat insulating material 211C such as hard urethane foam filled by foaming into a space formed between the inner casing 211A and the outer casing 211B.

An interior space of the casing 211 is partitioned into a plurality of storage rooms defined by separating walls 212 to 214. Specifically, a chillroom 219 is provided at an upper portion of the casing 211, and a storage room (not shown) and an ice making room 220 are arranged side by side under the chillroom 219. A freezing room 221 is provided under the storage room and the ice making room 220. A vegetable room 222 is provided under the freezing room 221.

The casing 211 is open at its front surface and is provided with doors. The chillroom 219 is provided with a rotatable door 215. The ice making room 220, the freezing room 221, and the vegetable room 222 are provided with drawing doors 216 to 218 having rails and the like, respectively.

The casing 211 has a recessed portion on a back portion thereof, which defines a mechanical room 240. Components (devices) constituting a refrigeration cycle including the sealed compressor 100, a drier (not shown) for removing a moisture, and a condenser 231, are accommodated into the mechanical room 240. Although in Embodiment 8, the mechanical room 240 is provided at the upper portion of the casing 211, the present invention is not limited to this, and the mechanical room 240 may be provided at a center portion or a lower portion of the casing 211.

The refrigeration cycle includes the sealed compressor 100, the discharge pipe 108, the condenser 231, a capillary 232, a cooler(evaporator) 228 and the suction pipe 107. Specifically, the sealed compressor 100 and the condenser 231 are coupled together by means of the discharge pipe 108, while the condenser 231 and the cooler 228 are coupled together by means of the capillary 232. The cooler 228 and the sealed compressor 100 are coupled together by means of the suction pipe 107.

The capillary 232 and the discharge pipe 108 extend vertically, and become sinuous horizontally in their intermediate portions. The capillary 232 and the discharge pipe 108 are arranged such that larger portions of pipes of the capillary 232 and of the discharge pipe 108 are in contact with each other, to enable heat exchange between them.

In the case of a refrigeration cycle using a three-way valve or a switching valve in the casing 211, their functional members are arranged inside the mechanical room 240, in some cases. Although in Embodiment 4, a pressure-reducing device comprises the capillary, the present invention is not limited to this. For example, an electronic expansion valve capable of freely controlling a flow rate of a refrigerant, which is actuated by a pulse motor may be used as the pressure-reducing device.

The casing 211 is provided with a cooling room 226 at a back side of the center portion thereof. The cooling room 226 is defined by the separating wall 225 connecting the separating wall 212 and the separating wall 214 together. The cooler (evaporator) 228 is provided in the cooling room 226. A cooling fan 227 is positioned above the cooler 228 to blow cool air generated in the cooler 228 to the chillroom 219 or the like via a cool air passage 224, or the like. The cool air passage 224 is formed by a space defined by the separating wall 223 extending vertically on the separating wall 212 and the back surface of the casing 211.

### [Operation of refrigeration unit]

Next, an operation of the refrigeration unit 200 according to Embodiment 4 will be described with reference to Figs. 9 and 10.

In the refrigeration unit 200 according to Embodiment 4, the sealed compressor 100 is activated in response to a signal issued from a controller (not shown) according to a set internal temperature, and a cooling operation is performed. Specifically, according to the operation of the sealed compressor 100, discharged refrigerant which is in a high-temperature and high-pressure state is supplied to the condenser 231 through the discharge pipe 108. A portion of the supplied refrigerant is condensed and liquefied in the condenser 231, and is supplied to refrigerant pipes (not shown) attached to the side surface, the back surface, and the like of the casing 211. While flowing through the refrigerant pipes, the refrigerant is condensed and liquefied while suppressing generation of liquid droplets adhered to the casing 211 and is supplied to the capillary 232.

While flowing through the capillary 232, the refrigerant exchanges heat with the suction pipe 107 (including refrigerant flowing through the suction pipe 107), and its pressure is reduced. Then, the refrigerant which is in a low-temperature and low-pressure state is supplied to the cooler (evaporator) 228.

In the cooler (evaporator) 228, the refrigerant exchanges heat with the air present in the cooling room 226 and thereby is evaporated (vaporized). Thereby, the air in the vicinity of the cooler 228 is cooled, and the cooled air (cool air) is caused to flow through the cool air passage 224 by the cooling fan 227, to be supplied to the chillroom 219, etc.. While flowing through the cool air passage 224, the cool air is divided to flow into the chillroom 219, the storage room (not shown), the ice making room 220, the freezing room 221 and the vegetable room 222, by a damper (not shown) or the like, and cools them to attain their desired temperature zones.

The cooled refrigerant is supplied to the sealed compressor 100 through the suction pipe 107, is compressed by the sealed compressor 100 and is discharged to the discharge pipe 108. Thus, the refrigerant is circulated repetitively.

The refrigeration unit 200 according to Embodiment 4 configured as described above includes the sealed compressor 100 according to Embodiment 1, and therefore can achieve the same advantages as those of the sealed compressor 100 of Embodiment 1.

The sealed compressor 100 is an inverter compressor which rotates at plural rotational speeds. In general, when the compressor is run at plural rotational speeds using the inverter unit 201, it tends to generate a noise according to a change in the rotational speed, and is likely to resonate with components in a refrigerator body, due to a noise or a vibration.

However, the refrigeration unit 200 according to Embodiment 4 includes the sealed compressor 100 of Embodiment 1. Therefore, the refrigeration unit 200 is able to sufficiently feed the lubricating oil 102 to the thrust ball bearing 132, which makes it possible to suppress a prying or a point contact between the balls 134 and the race or the like inside of the thrust ball bearing 132.

Thus, it becomes possible to lessen a noise or a vibration of the compressor, and hence suppress a noise or a vibration in the refrigerator body.

As described in the above described embodiments, in the present embodiment, a running rotational speed (revolution) range is set to 17r/s to 80r/s, and a high efficiency and a good noise-proof characteristic can be attained within this running rotational speed range.

Although in Embodiment 4, the refrigeration unit 200 includes the sealed compressor 100 of Embodiment 1, the present invention is not limited to this, and may include the sealed compressor 100 of Embodiment 2 or 3.

Numeral modifications and alternative embodiments of the present invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the spirit of the invention.

### Industrial Applicability

A sealed compressor and a refrigeration unit including the sealed compressor the present invention are able to maintain a state in which balls rotate smoothly, and achieve a higher efficiency of the sealed compressor, and are therefore useful.

### Reference Signs List

- 100: sealed compressor
- 101: sealed container
- 102: lubricating oil
- 103: stator
- 104: rotor
- 105: electric component
- 106: compression component
- 107: suction pipe
- 108: discharge pipe
- 110: shaft
- 111: main shaft section
- 112: eccentric shaft section
- 113: joint section
- 114: cylinder block
- 115: guide section
- 116: compression chamber
- 117: cylinder
- 118: recess
- 119: main surface
- 120: main bearing unit
- 126: piston
- 128: connecting member
- 130: thrust surface
- 132: thrust ball bearing
- 133: cage
- 134: ball
- 135: upper race
- 136: lower race
- 137: raceway groove
- 138: raceway groove
- 139: cage pocket
- 144: bearing extending section
- 145: flange surface
- 146: clearance
- 150: first oil feeding passage
- 150A: suction-up section
- 150B: passage section
- 154: clearance
- 155: hollow portion
- 156: discharge hole
- 160: second oil feeding passage
- 170: upper end
- 171: electric and compression component
- 173: coil spring
- 174: shell snubber
- 175: snubber
- 180: discharge passage
- 182: clearance
- 183: clearance
- 184: clearance
- 185: clearance
- 200: refrigeration unit
- 201: inverter unit
- 202: utility power supply
- 203: electric wire
- 211: casing
- 211A: inner casing
- 211B: outer casing
- 211C: foamed heat insulating material
- 212: separating wall
- 213: separating wall
- 214: separating wall
- 215: door
- 216: door
- 217: door
- 218: door
- 219: chillroom
- 220: ice making room
- 221: freezing room
- 222: vegetable room
- 223: separating wall
- 224: cool air passage
- 225: separating wall
- 226: cooling room
- 227: cooling fan
- 228: cooler (evaporator)
- 231: condenser
- 232: capillary
- 240: mechanical room

## Claims

1. A sealed compressor (100) comprising:
an electric component (105) including a stator (103) and a rotor (104);
a compression component (106) actuated by the electric component (105); and
a sealed container (101) accommodating the electric component (105) and the compression component (106) and storing lubricating oil (102) for lubricating the compression component (106);
wherein the compression component (106) includes a shaft (110) including a main shaft section (111) to which the rotor (104) is fastened and an eccentric shaft section (112), a cylinder block (114) accommodating a piston (126) reciprocatable according to rotation of the shaft (110), a main bearing unit (120) mounted on the cylinder block (114) to support the main shaft section (111), and a thrust ball bearing (132) disposed between a flange surface (145) formed in the shaft (110) and a thrust surface (130) formed in the main bearing unit (120);
the main shaft section (111) is provided with a first oil feeding passage (150) to transport the lubricating oil (102) from a lower portion of the main shaft section (111) to an upper portion of the main shaft section (111);
the thrust ball bearing (132) includes a plurality of balls (134) held in a cage (133), an upper race (135) disposed such that one of its main surfaces (119) is in contact with upper portions of the balls (134); and a lower race (136) disposed such that one of its main surfaces (119) is in contact with lower portions of the balls (134);
the main surface (119) of the upper race (135) and the main surface (119) of the lower race (136) face each other;
at least one of the main surface (119) of the upper race (135) and the main surface (119) of the lower race (136), the main surfaces (119) facing each other, is provided with a raceway groove (137, 138) which is formed by an annular groove, and in which the balls (134) are placed; and
the thrust ball bearing (132) is provided with a second oil feeding passage (160) communicated with the first oil feeding passage (150) and configured to feed the lubricating oil (102) to the raceway groove (137, 138) and a discharge passage (180) through which the lubricating oil (102) fed to the raceway groove (137, 138) is discharged to outside of the thrust ball bearing (132);
**characterized in that** the thrust surface (130) of the main bearing unit (120) is defined by a bottom surface of a recess formed in a main surface (119) of the main bearing unit (120) wherein the thrust surface (130) is provided with a discharge hole (156) to discharge the lubricating oil (102).

2. The sealed compressor (100) according to Claim 1,
wherein the thrust surface (130) is defined by an inner bottom surface of a recess (118) formed in a main surface (119) which is an upper surface of the main bearing unit (120); and
the main surface (119) of the main bearing unit (120) is disposed below a lower surface of the cage (133).

3. The sealed compressor (100) according to Claim 1 or 2, further comprising:
a snubber (175) provided at a lower portion of an electric and compression component (171) including the electric component (105) and the compression component (106);
a shell snubber (174) provided at an inner bottom surface of the sealed container (101) to face the snubber (175); and
a coil spring (173) through which the snubber (175) and the shell snubber (174) are inserted, the coil spring (173) being configured to elastically support the electric and compression component (171);
wherein a distance between a lower end portion of the shaft (110) and an inner bottom surface of the sealed container (101) is greater than a distance between a lower end of the snubber (175) and an upper end (170) of the shell snubber (174).

4. The sealed compressor (100) according to any one of Claims 1 to 3,
wherein the cage (133) has an inner diameter greater than an inner diameter of the upper race (135) and an inner diameter of the lower race (136).

5. The sealed compressor (100) according to any one of Claims 1 to 4, further comprising:
an inverter unit (201);
wherein the sealed compressor (100) is actuated by the inverter unit (201) by rotational speeds of two or more kinds, including a rotational speed lower than a power supply frequency.

6. A refrigeration unit (200) comprising the sealed compressor (100) according to any one of Claims 1 to 5.

## Patentansprüche

1. Abgedichteter Verdichter (100), umfassend:
eine elektrische Baugruppe (105), die einen Stator (103) und einen Rotor (104) beinhaltet;
eine Verdichterbaugruppe (106), die von der elektrischen Baugruppe (105) angetrieben wird; und
einen abgedichteten Behälter (101), der die elektrische Baugruppe (105) und die Verdichterbaugruppe (106) aufnimmt und der Schmieröl (102) zum Schmieren der Verdichterbaugruppe (106) speichert;
wobei die Verdichterbaugruppe (106) enthält: eine Welle (110), die einen Hauptwellenabschnitt (111), an welchem der Rotor (104) befestigt ist, und einen exzentrischen Wellenabschnitt (112) beinhaltet, einen Zylinderblock (114), der einen Kolben (126), welcher in Folge der Rotation der Welle (110) hin- und herbewegbar ist, aufnimmt, eine Hauptlagereinheit (120), die am Zylinderblock (114) zum Lagern des Hauptwellenabschnitts (111) angebracht ist, und ein Druckkugellager (132), das zwischen einer in der Welle (110) ausgebildeten Flanschfläche (145) und einer in der Hauptlagereinheit (120) ausgebildeten Druckfläche (130) angeordnet ist;
der Hauptwellenabschnitt (111) ist mit einem ersten Ölzufuhrkanal (150) versehen, um das Schmieröl (102) von einem unteren Segment des Hauptwellenabschnitts (111) zu einem oberen Segment des Hauptwellenabschnitts (111) zu fördern;
das Druckkugellager (132) beinhaltet eine Vielzahl von Kugeln (134), die in einem Käfig (133) gehalten sind, einen oberen Laufring (135), der so angeordnet ist, dass eine seiner Hauptflächen (119) in Kontakt mit den oberen Abschnitten der Kugeln (134) steht; und einen unteren Laufring (136), der so angeordnet ist, dass eine seiner Hauptflächen in Kontakt mit den unteren Abschnitten der Kugeln (134) steht;
die Hauptfläche (119) des oberen Laufrings (135) und die Hauptfläche (119) des unteren Laufrings (136) sind einander zugewandt;
zumindest eine der Hauptflächen (119), die Hauptfläche (119) des oberen Laufrings (135) und die Hauptfläche (119) des unteren Laufrings (136), wobei die Hauptflächen einander zugewandt sind, ist mit einer Laufringnut (137, 138) versehen, welche durch eine ringförmige Nut gebildet ist und in welcher die Kugeln (134) angeordnet sind; und
das Druckkugellager (132) ist versehen mit einem zweiten Ölzufuhrkanal (160), der mit dem ersten Ölzufuhrkanal (150) in Verbindung steht und der dazu ausgelegt ist, das Schmieröl (102) in die Laufringnut (137, 138) zu leiten, und mit einem Abführkanal (180), durch welchen das der Laufringnut (137, 138) zugeführte Schmieröl (102) aus dem Druckkugellager (132) ausgetragen wird;
**dadurch gekennzeichnet, dass** die Druckfläche (130) der Hauptlagereinheit (120) durch eine Bodenfläche einer Vertiefung definiert ist, die in einer Hauptfläche (119) der Hauptlagereinheit (120) ausgebildet ist, wobei die Druckfläche (130) mit einem Ablassloch (156) zum Ablassen des Schmieröls (102) versehen ist.

2. Abgedichteter Verdichter (100) nach Anspruch 1,
wobei die Druckfläche (130) durch eine innere Bodenoberfläche einer Vertiefung (118) definiert ist, die in einer Hauptfläche (119), welche eine obere Fläche der Hauptlagereinheit (120) ist, ausgebildet ist; und
die Hauptfläche (119) der Hauptlagereinheit (120) unterhalb einer unteren Fläche des Gehäuses (133) angeordnet ist.

3. Abgedichteter Verdichter (100) nach Anspruch 1 oder 2, weiter enthaltend:
einen Stoßdämpfer (175), der an einem unteren Abschnitt einer Elektro- und Verdichterbaugruppe (171) vorgesehen ist, die die elektrische Baugruppe (105) und die Verdichterbaugruppe (106) beinhaltet;
einen mit einer Ummantelung versehener Stoßdämpfer (174), der an einer inneren Bodenfläche des abgedichteten Behälters (101) so vorgesehen ist, dass er dem Stoßdämpfer (175) gegenüberliegt; und
eine Spiralfeder (173), in welche der Stoßdämpfer (175) und der mit einer Ummantelung versehene Stoßdämpfer (174) eingesetzt sind, wobei die Spiralfeder (173) dazu ausgelegt ist, die Elektro- und Verdichterbaugruppe (171) elastisch zu lagern;
wobei ein Abstand zwischen einem unteren Endabschnitt der Welle (110) und einer inneren Bodenoberfläche des abgedichteten Behälters (101) größer als ein Abstand zwischen einem unteren Ende des Stoßdämpfers (175) und einem oberen Ende (170) des mit einer Ummantelung versehenen Stoßdämpfers (174) ist.

4. Abgedichteter Verdichter (100) nach einem der Ansprüche 1 bis 3,
wobei das Gehäuse (133) einen Innendurchmesser aufweist, der größer ist als ein Innendurchmesser des oberen Laufrings (135) und ein Innendurchmesser des unteren Laufrings (136).

5. Abgedichteter Verdichter (100) nach einem der Ansprüche 1 bis 4, weiter enthaltend:
eine Umrichtereinheit (201);
wobei der abgedichtete Verdichter (100) durch die Umrichtereinheit (201) mittels Rotationsgeschwindigkeiten von zwei oder mehr Arten angetrieben wird, die eine Rotationsgeschwindigkeit, die niedriger als die Netzfrequenz ist, umfassen.

6. Kühleinheit (200), die den abgedichteten Verdichter (100) nach einem der Ansprüche 1 bis 5 enthält.

## Revendications

1. Compresseur étanche (100) comprenant:
un composant électrique (105) incluant un stator (103) et un rotor (104);
un composant de compression (106) actionné par le composant électrique (105); et
un récipient étanche (101) recevant le composant électrique (105) et le composant de compression (106) et stockant de l'huile de lubrification (102) destinée à lubrifier le composant de compression (106);
dans lequel le composant de compression (106) inclut un arbre (110) incluant une section d'arbre principal (111) à laquelle le rotor (104) est fixé et une section d'arbre excentrique (112), un bloc-cylindres (114) recevant un piston (126) pouvant être animé d'un mouvement de va-et-vient en fonction de la rotation de l'arbre (110), une unité de palier principal (120) montée sur le bloc-cylindres (114) pour supporter la section d'arbre principal (111), et un palier à bis de butée (132) disposé entre une surface de bride (145) formée dans l'arbre (110) et une surface de poussée (130) formée dans l'unité de palier principal (120);
la section d'arbre principal (111) est pourvue d'un premier passage d'alimentation en huile (150) pour transporter l'huile de lubrification (102) d'une partie inférieure de la section d'arbre principal (111) à une partie supérieure de la section d'arbre principal (111);
le palier à billes de butée (132) inclut une pluralité de billes (134) maintenues dans une cage (133), une bague supérieure (135) disposée de telle sorte que l'une de ses surfaces principales (119) est en contact avec des parties supérieures des billes (134); et une bague inférieure (136) disposée de telle sorte qu'une de ses surfaces principales (119) est en contact avec des parties inférieures des billes (134);
la surface principale (119) de la bague supérieure (135) et la surface principale (119) de la bague inférieure (136) se font face;
au moins l'une de la surface principale (119) de la bague supérieure (135) et de la surface principale (119) de la bague inférieure (136), des surfaces principales (119) se faisant face, est pourvue d'une rainure de chemin de roulement (137, 138) qui est formée par une rainure annulaire, et dans laquelle les billes (134) sont placées; et
le palier à billes de butée (132) est pourvu d'un second passage d'alimentation en huile (160) en communication avec le premier passage d'alimentation en huile (150) et configuré pour alimenter en huile de lubrification (102) la rainure de chemin de roulement (137, 138) et un passage d'évacuation (180) à travers lequel l'huile de lubrification (102) introduite dans la rainure de chemin de roulement (137, 138) est évacuée vers l'extérieur du palier à billes de butée (132);
**caractérisé en ce que** la surface de poussée (130) de l'unité de palier principal (120) est définie par une surface inférieure d'un évidement formé dans une surface principale (119) de l'unité de palier principal (120), la surface de poussée (130) étant pourvue d'un trou d'évacuation (156) pour évacuer l'huile de lubrification (102).

2. Compresseur étanche (100) selon la revendication 1,
dans lequel la surface de poussée (130) est définie par une surface inférieure interne d'un évidement (118) formé dans une surface principale (119) qui est une surface supérieure de l'unité de palier principal (120); et
la surface principale (119) de l'unité de palier principal (120) est disposée au-dessous d'une surface inférieure de la cage (133).

3. Compresseur étanche (100) selon la revendication 1 ou 2, comprenant en outre:
un amortisseur (175) disposé au niveau d'une partie inférieure d'un composant électrique et de compression (171) incluant le composant électrique (105) et le composant de compression (106);
un amortisseur de coque (174) disposé au niveau d'une surface inférieure interne du récipient étanche (101) pour faire face à l'amortisseur (175); et
un ressort hélicoïdal (173) à travers lequel l'amortisseur (175) et l'amortisseur de coque (174) sont insérés, le ressort hélicoïdal (173) étant configuré pour supporter élastiquement le composant électrique et de compression (171);
dans lequel une distance entre une partie d'extrémité inférieure de l'arbre (110) et une surface inférieure interne du récipient étanche (101) est supérieure à une distance entre une extrémité inférieure de l'amortisseur (175) et une extrémité supérieure (170) de l'amortisseur de coque (174).

4. Compresseur étanche (100) selon l'une quelconque des revendications 1 à 3,
dans lequel la cage (133) a un diamètre interne supérieur à un diamètre interne de la bague supérieure (135) et un diamètre interne de la bague inférieure (136).

5. Compresseur étanche (100) selon l'une quelconque des revendications 1 à 4, comprenant en outre:
une unité d'onduleur (201);
dans lequel le compresseur étanche (100) est actionné par l'unité d'onduleur (201) par des vitesses de rotation de deux types ou plus, incluant une vitesse de rotation inférieure à une fréquence d'alimentation électrique.

6. Unité de réfrigération (200) comprenant le compresseur étanche (100) selon l'une quelconque des revendications 1 à 5.
